## Europäisches Patentamt
## European Patent Office
## Office européen des brevets

(11) Veröffentlichungsnummer: **0 250 735**
**B1**

(12) **EUROPÄISCHE PATENTSCHRIFT**

(45) Veröffentlichungstag der Patentschrift:
08.08.90

(21) Anmeldenummer: 87105353.4

(22) Anmeldetag: 10.04.87

(51) Int. Cl.⁵: **A22C 11/08,** F04B 15/02,
F04C 11/00, F04C 2/10

(54) Fördereinrichtung, insb. für steife Masse.

(30) Priorität: 24.05.86 DE 3617495

(43) Veröffentlichungstag der Anmeldung:
07.01.88 Patentblatt 88/1

(45) Bekanntmachung des Hinweises auf die Patenterteilung:
08.08.90 Patentblatt 90/32

(84) Benannte Vertragsstaaten:
AT BE CH ES FR GB IT LI NL SE

(56) Entgegenhaltungen:
AT-B- 255 275
AT-B- 292 494
DE-A- 1 432 513
DE-A- 1 952 337
DE-A- 2 117 000
DE-B- 1 175 107
DE-C- 459 031

(73) Patentinhaber: Karl Schnell Maschinenfabrik,
Mühlstrasse 30, D-7065 Winterbach(DE)

(72) Erfinder: Schnell, Karl, Mühlstrasse 28,
D-7065 Winterbach(DE)

(74) Vertreter: Schmid, Berthold, Patentanwälte Dipl.-Ing. B.
Schmid Dr. Ing. G. Birn Falbenhennenstrasse 17,
D-7000 Stuttgart 1(DE)

ACTORUM AG

## Beschreibung

Die Erfindung bezieht sich auf eine Fördereinrichtung, insbesondere für steife Massen, mit einer Pumpe die aus einem in einem Pumpengehäuse drehbar gelagerten, antreibbaren innenverzahnten Außenrad sowie einem darin drehbaren außenverzahnten Ritzel, welches exzentrisch zum Außenrad angeordnet ist, besteht, wobei sich im Spaltraum zwischem dem Außenrad undRitzel ein keilförmiges, gebogenes Drucksegment befindet, welches in Drehrichtung gesehen zwischen dem Einlaß und dem im Umfangs richtung versetzten Auslaß angeordnet ist. Derartige Pumpen sind an sich bekannt und sie werden vielfach zur Förderung pastöser Massen eingesetzt. Man findet sie insbesondere in der fleischverarbeitenden Industrie, aber auch in anderen Zweigen des Nahrungsmittelsektors (z.B. DE-A 1 952 337).

Es hat sich nun gezeigt, daß derartige Förderpumpen nicht jedes Fördergut ansaugen können und es insbesondere beim Förmern steifer Massen, denen man gerade in der fleischverarbeitenden Industrie häufig begegnet, Schwierigkeiten gibt.

Die Aufgabe der Erfindung besteht infolgedessen darin, diese Förderpumpen auch diesem speziellen Anwendungszweck zu erschließen.

Zur Lösung dieser Aufgabe wird erfindungsgemäß vorgeschlagen, daß die Fördereinrichtung gemäß dem Oberbegriff des Anspruchs 1 entsprechend dem kennzeichnenden Teil dieses Anspruchs ausgebildet ist. Das zu pumpende Gut wird in den Füllbehälter eingebracht. Dies kann von Hand oder mittels einer geeigneten Beschickungseinrichtung geschehen. In diesem Einfüllbehälter befindet sich nun eine Fördervorrichtung, welche aufgrund ihrer Ausbildung geeignet ist, das eingebrachte Gut gegen die Einlaßöffnung der Pumpe hin zu fördern, so daß es sicher in die Saugseite der Pumpe gelangt und die Pumpe stets ganz gefüllt ist. Dies ist insbesondere dann wichtig, wenn diese Pumpe in Verbindung mit einer Portionierung des Pumpgutes verwendet wird. Bekanntlich wird das zu fördernde Gut in den Zwischenräumen zwischen den Zähnen des Ritzels und des Außenrades in Umfangsrichtung gefördert und mit Hilfe der Zähne von Ritzel und Außenrad aus diesen Zwischenräumen herausgedrückt. Die Exzentrizität des Ritzels im Bezug auf die geometrische Achse des Außenrads ist deshalb so gewählt, daß seine Zähne im Bereich der Auslaßöffnung in die Zahnlücken des Außenrades eindringen und umgekehrt.

Die Erfindung sieht vor, daß sich im Einfüllbehälter ein das Mitdrehen des eingefüllten Gutes, also der zu fördernden Masse, unterbindender Stopper befindet. Wenn nämlich die Fördervorrichtung einen rotierenden Förderer enthält, so kann dies dazu führen, daß die steife Masse im Behälter rotiert, vor allen Dingen wenn dieser rotationssymmetrisch gestaltet ist. Der Stopper verhindert nun erfolgreich diese Rotation oder dieses Mitlaufen der Masse mit dem rotierenden Förderelement. Der Stopper stellt sich der zum Rotieren neigenden Masse in den Weg und er bewirkt zugleich auch ein Durchmischen. Seine Formgebund richtet sich einerseits nach der Form des Behälters und andererseits nach derjenigen des Förderelements der Fördervorrichtung.

Die Fördervorrichtung besteht im wesentlichen aus einer antreibbaren Schnecke od. dgl., deren Bewegungsbereich an die Kontur des Behälters, insbesondere des dem Pumpengehäuse Ende zugeordneten des Behälters, angepaßt ist. Die Förderwirkung ist dabei umso günstiger, je geringer der Abstand der Schnecke od. dgl. von der Behälterinnenwandung im betreffenden Bereich ist.

Die Antriebswelle der Schnecke od. dgl. ist im rotationssymmetrisch ausgebildeten Behälter zentrisch angeordnet und zumindest das dem Pumpengehäuse zugeordnete untere Behälterende ist kegel- oder kegelstumpfförmig gestaltet. In diesem Zusammenhang kennzeichnet sich eine weitere Variante der Erfindung dadurch, daß die Schnecke od. dgl. die Gestalt einer aus einem bandförmigen Element gefertigten kegelförmigen Spirale aufweeist, wobei in das dem Pumpengehäuse abgewendete Spiralende der Stopper mit geringem Spiel eingreift. Diese Schnecke od. dgl. kann man als hohl betrachten, jedoch können zur Versteifung radiale Streben zur Antriebswelle vorgesehen sein. Sie müssen allerdings so angebracht werden, daß sie mit dem Stopper nicht kollidieren können.

Der Stopper besteht aus wenigstens einem, vorzugsweise aber zwei um 180° versetzten, bogen- oder C-förmigen Stopperelementen, deren freie Schenkelenden von oben her in die Spirale eingreifen. Form und Größe des Stoppers sind so festzulegen, daß einerseits ein Umlaufen seines freien Endes durch das obere Spiralende ungehindert möglich ist und er andererseits möglichst nahe an die Behälterwandung heranreicht. Der Abstand von letzterer kann jedoch wesentlich größer gewält werden als derjenige zum Bewegungsbereich der inneren Schneckenkontur.

Weitere Ausgestaltungen und Vorteile dieser Pumpe ergeben sich aus den Ansprüchen sowie der nachstehenden Beschreibung eines Ausführungsbeispiels.

Die Zeichnung zeigt ein derartiges Ausführungsbeispiel. Hierbei stellen dar:

Fig. 1 Einen Vertikalschnitt durch die Pumpe,
Fig. 2 eine Draufsicht auf die Pumpe in Pfeilrichtung A der Fig. 1, bei abgenommenen Behälter und in vergrößertem Maßstab.

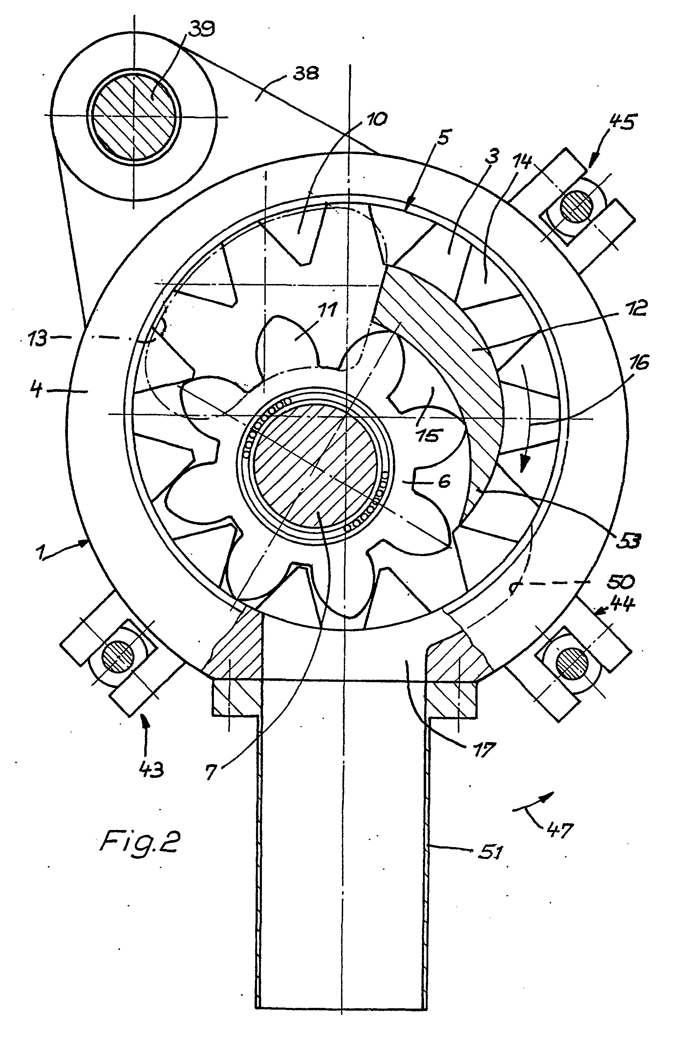

Das Gehäuse 1 der Pumpe besteht im wesentlichen aus einer oberen plattenförmigen Gehäusewand 2, einer dazu parallelen unteren plattenförmigen Gehäusewand 3 und einem dazwischen gelegenen oder diese Gehäuseteile umgebenden, rohrförmigen Gehäusewand 4. Im Inneren dieses im wesentlichen kreiszylindrischen Innenraumes befindet sich ein innenverzahntes Außenrad 5, dessen geometrische Achse mit derjenigen der Gehäusewand 4 zusammenfällt. Exzentrisch dazu ist ein außenverzahntes Ritzel auf einem Lagerzapfen 7 drehbar gelagert, welches vom Außenrad 5 angetrieben wird. Der Antrieb selbst besteht aus einem Elektromotor 8 mit Getriebe 9. Beim Getriebe handelt es sich in bevorzugter Weise um ein Kegel-Stirnrad-Getriebe. Zwischen den Zähnen 10 des Außenrads 5 und den Zähnen 11 des Ritzels 6 entsteht ein mondsichelförmiger Zwischenraum. Ein Teil davon ist von einem Drucksegment 12 ausgefüllt, welches infolgedessen die Gestalt eines Teils einer Mondsichel aufweist. Über dem restlichen Teil befindet sich die Einlaßöffnung 13. Das über letztere eingebrachte Fördergut wird über die Zahnlücken 14 des Außenrads 5 und 15 des Ritzels 6 im Sinne des Pfeils 16 zur Auslaßöffnung 17 transportiert. Dort treten die Zähne 11 des Ritzels 6 in die Zahnlücken 14 des Außenrads 5 und umgekehrt. Infolgedessen wird die in den Zahnlücken befindliche Masse herausgedrückt und zur Auslaßöffnung 17 befördert. Aus dem Vorstehenden wird klar, daß die Länge der Zähne, senkrecht zur Bildebene der Fig. 2 gemessen, dem Innenabstand der Gehäusewände 2 und 3 entspricht.

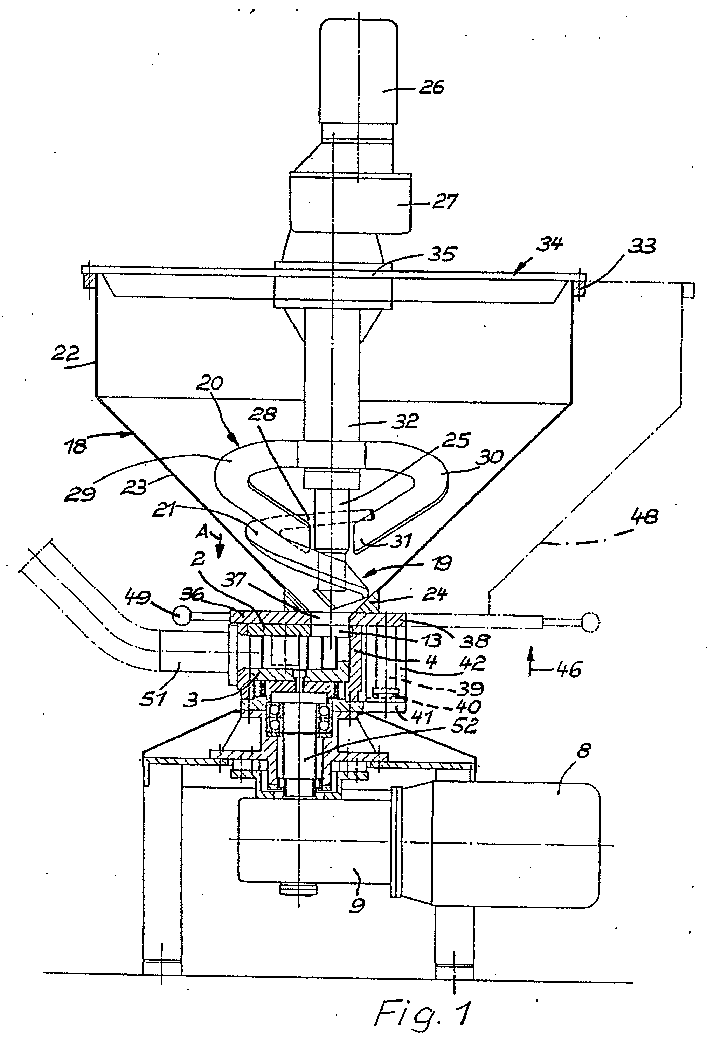

Der Einlaßöffnung 13 der Pumpe bzw. des Pumpengehäuses 1 ist ein Einfüllbehälter 18 vorgesetzt. Die Pumpe ist als liegende Pumpe ausgebildet und infolgedessen befindet sich der Einfüllbehälter über der Pumpe (Fig. 1). Im Einfüllbehälter 18 ist eine Fördervorrichtung 19 untergebracht, deren Förderrichtung gegen die Einlaßöffnung 13 der Pumpe gerichtet ist. Des weiteren befindet sich im Einfüllbehälter 18 ein das Mitdrehen des eingefüllten Gutes unterbindender Stopper 20. Die Fördervorrichtung 19 besteht im wesentlichen aus einer antreibbaren Schnecke 21, deren Bewegungsbereich oder Flugbereich an die Kontur des Behälters, insbesondere des zugeordneten Behälterteils, angepaßt ist. Gemäß Fig. 1 besteht der Behälter beim Ausführungsbeispiel aus einem oberen zylinderförmigen Behälterteil 22 und einem unteren konischen oder kegelförmigen Behälterteil 23. Er ist beispielsweise aus Blech gefertigt und trägt an seinem unteren Ende einen Verstärkungsring 24.

Die Antriebswelle 25 der Förderschnecke 21 ist zentrisch in diesem rotationssymmetrisch ausgebildeten Behälter angeordnet und mittels eines Elektromotors 26 unter Zwischenschaltung eines Getriebes 27, vorzugsweise eines Stirnradgetriebes, antreibbar. Die Schnecke 21 hat die Gestalt eines bandförmigen Elements, welches zu einer kegelförmigen Spirale gebogen ist. In das obere Spiralende 28 greift der Stopper 20 mit geringem Spiel ein. Dieses Spiel beträgt beispielsweise wenige Millimeter, so daß der Stopper in gewisser Weise auch noch als Abstreifer für die Spirale dienen kann.

Der Stopper 20 besteht seinerseits aus wenigstens einem, gemäß dem Ausführungsbeispiel und vorzugsweise aber aus zwei um 180° versetzten bogen- oder C-förmigen Stopperelementen 29 und 30. Deren freie Schenkelenden 31 greifen von oben her in die Schnecke 21 od. dgl. bzw. das obere Spiralende 28 ein.

Der oder die Stopper 20 ist bzw. sind an einer die Antriebswelle 25 der Schnecke 21 od. dgl. umgebenden Führungsbüchse 32 befestigt, wobei die freien C-Elementenden 31 gegen die Antriebswelle 25 weisen.

Auf den Behälterrand 33 ist eine Halterung 34 für den antrieb 26, 27 der Fördervorrichtung 19 aufgesetzt. Sie besteht vorzugsweise aus einem dreiarmigen Lagerflansch mit einem zentrischen Halterungselement 35.

In Durchtrittsrichtung gesehen befindet sich vor der Einlaßöffnung 13 der Pumpe eine Tragplatte 36 für den Einfüllbehälter 18. Sie ist mit einem Durchbruch 37 versehen, der formlich etwa der darunterliegenden Einlaßöffnung 13 der Pumpe entspricht. Die Tragplatte 36 ist mit einem seitlichen Ansatz 38 versehen, der mit einem Lagerbock vergleichbar ist. Er trägt einen Lagerbolzen 39, dessen unteres Ende gemäß Fig. 1, vorzugsweise im Durchmesser vergrößert ist. Darunter befindet sich eine Feder oder ein Federpaket, beispielsweise ein Tellerfederpaket, welches auf einer ortsfesten Wand 41 unterhalb des Pumpengehäuses 1 direkt oder indirekt abgestützt ist. In der in Fig. 1 gezeichneten Stellung des Lagerbolzens 39 ist das Federpaket 40 gespannt. Im übrigen durchsetzt der Lagerbolzen 39 eine gehäusefeste Lagerhülse 42, welche mit der Wand 41 verbunden ist. Die geometrische Achse des Lagerbolzens 39 verläuft parallel zu derjenigen der Fördervorrichtung 19 bzw. Der Antriebswelle 25. Damit steht sie auch senkrecht zur Ebene der Tragplatte 36.

Die Tragplatte 36 ist über mindestens einen, beim Ausführungsbeispiel aber über drei um 90° gegeneinander versetzte Verschlüsse 43, 44, 45 mit dem Pumpengehäuse 1 verbunden. Sie sind von herkömmlicher Art und bestehen beispielsweise aus Augenschrauben mit Scheibe und Mutter. Etwa auf Lücke zwischen den beiden "äußeren" Verschlüssen 43 und 45 befindet sich der seitliche Ansatz 38. Öffnet man diese drei Verschlüsse, so kann sich die Kraft des Federpakets 40 auswirken. Es drückt die Tragplatte 36 im Sinne des Pfeils 46 etwas nach oben, so daß sie einen geringen Abstand von der oberen Gehäusewand 2 bekommt. Anschließend kann man den Einfüllbehälter 18 mit sämtlichen fest damit verbundenen Teilen, beispielsweise im Sinne des Pfeils 47 (Fig. 2), um den Lagerbolzen 39 verschwenken, wie dies in Fig. 1 mit strichpunktierten Linien 48 angedeutet ist. Auf diese Art und Weise wird zumindest die Einlaßöffnung 13, vorteilhafterweise aber die gesamte Pumpe zur Reinigung freigegeben. Mit Hilfe eines, vorzugsweise radial abstehenden Griffes 49 wird der Behälter 18 verschwenkt.

In die rohrförmige Gehäusewand 4 ist eine Tasche 50 eingearbeitet. Sie geht in die radiale Auslaßöffnung 17 der Pumpe über. Daran schließt sich beim Ausführungsbeispiel ein Auslaufrohr 51 an. Wie Fig. 2 zu entnehmen ist, befindet sich die Tasche 50 im Bereich des in Drehrichtung 16 gesehen vorderen Endes 53 des Drucksegments 12. Es erleichtert die Entleerung der Zahnlücken 14 und 15.

Diese Förderpumpe kann überall dort eingesetzt werden, wo vergleichsweise steife Massen, welche von diesem Pumpentyp nicht oder unzureichend angesaugt werden können, zu einem Verbraucher oder zu einer verarbeitenden Maschine, beispielsweise einer Wurstfüllmaschine, in einem kontinuierlichen Strom gepumpt werden müssen.

## Patentansprüche

1. Fördereinrichtung insbesondere für steife Massen, mit einer Pumpe, die aus einem in einem Pumpengehäuse (1–4) drehbar gelagerten, antreibbaren innenverzahnten Außenrad (5) sowie einem darin drehbaren, außenverzahnten Ritzel (6), welches exzentrisch zum Außenrad angeordnet ist, besteht wobei sich im Spaltraum zwischen dem Außenrad (5) und dem Ritzel (6) ein keilförmiges gebogenes Drucksegment (12) befindet, welches in Drehrichtung (16) gesehen zwischen dem Einlaß (13) und dem in Umfangsrichtung versetzten Auslaß (17) angeordnet ist, dadurch gekennzeichnet, daß der Einlaßöffnung (13) der Pumpe ein Einfüllbehälter (18) vorgesetzt ist, in welchem sich eine Fördervorrichtung (19), deren Förderrichtung gegen die Einlaßöffnung (13) gerichtet ist und ein das Mitdrehen des eingefüllten Gutes unterbindender Stopper (20) befinden, wobei die Fördervorrichtung (19) im wesentlichen aus einer antreibbaren Schnecke (21) od. dgl. besteht, deren Bewegungsbereich an die Kontur des Behälters (18), insbesondere des dem Pumpengehäuse (1) zugeordneten Ende (23) des Behälters (18), angepaßt ist und deren Antriebswelle (25) im rotationssymmetrisch ausgebildeten Behälter (18) zentrisch angeordnet ist, wobei zumindest das dem Pumpemgehäuse (1) zugeordnete Behälterende (23) kegel– oder kegelstumpfförmig gestaltet ist, und die Schnecke (21) od. dgl. die Gestalt einer aus einem bandförmigen Element gefertigten kegelförmigen Spirale aufweist, wobei in das dem Pumpengehäuse (1) abgewendete, Spiralende (28) der Stopper (20) mit geringem Spiel eingreift, der aus wengistens einem, vorzugsweise aber zwei um 180°C versetzten, bogen– oder C-förmigen Stopperelementen (29, 30) besteht, deren freie Schenkelenden (31) von oben her in die Schnecke (21) od. dgl. eingreifen.

2. Fördereinrichtung nach Anpruch 1, dadurch gekennzeichnet, daß der oder die Stopper (20) an einer die Antriebswelle (25) der Schnecke (21) od. dgl. umgebenden Führungsbüchse (32) befestigt sind, wobei die freien C-Elementenden (31) gegen die Antriebswelle (25) weisen.

3. Fördereinrichtung nach wenigstens einem der vorhergehenden Ansprüche, gekennzeichnet durch eine auf den Behälterrand (33) aufgesetzte Halterung (34) für den Antrieb (26, 27) der Fördervorrichtung (19).

4. Fördereinrichtung nach Anspruch 3, dadurch gekennzeichnet, daß die Halterung (34) aus einem insbesondere dreiarmigen Lagerflansch und der Antrieb (26, 27) für die Fördervorrichtung (19) aus einem Elektromotor (26) mit einem Getriebe (27) bestehen.

5. Fördereinrichtung nach wenigstens einem der vorhergehenden Ansprüche, dadurch gekennzeichnet, daß sich die Einlaßöffnung (13) der Pumpe an deren oberer, insbesondere ebener Gehäusewand (2) befindet und oberhalb dieser Gehäusewand eine Tragplatte (36) für den Einfüllbehälter (18) angeordnet ist, die einen der Pumpeneinlaßöffnung entsprechenden Durchbruch (37) aufweist.

6. Fördereinrichtung nach Anspruch 5, dadurch gekennzeichnet, daß die Tragplatte, insbesondere mit einem seitlichen Ansatz (38) mit einer Lagerhülse oder einem Lagerbolzen (39) verbunden ist, wobei die Lagerhülse einen gehäusefesten Lagerbolzen umfaßt bzw. der Lagerbolzen (39) in eine gehäusefeste Lagerhülse (42) eingreift und die geometrische Lagerachse des Lagerbolzens (39) parallel zur Antriebswelle (25) der Fördervorrichtung (19) sowie senkrecht zur Ebene der Tragplatte (36) verläuft.

7. Fördereinrichtung nach Anspruch 5 oder 6, dadurch gekennzeichnet, daß die Tragplatte (36) über mindestens einen, vorzugsweise aber drei um 90° gegeneinander versetzte Verschlüsse (43, 44, 45) mit dem Pumpengehäuse (1) verbindbar ist.

8. Fördereinrichtung nach Anspruch 6 oder 7, gekennzeichnet durch wenigstens einen, insbesondere etwa radial abstehenden Griff (49) zum Verschwenken des Behälters (18) gegenüber dem Pumpengehäuse (1).

9. Fördereinrichtung nach Anspruch 7 oder 8, gekennzeichnet durch eine Abdrückvorrichtung (39, 40) zum geringfügigen Anheben des Behälters (18) gegenüber dem Pumpengehäuse (1) bei gelösten Verschlüssen (43 bis 45).

10. Fördereinrichtung nach Anspruch 9, dadurch gekennzeichnet, daß sich unterhalb des mit der Tragplatte (36) des Behälters (18) verbundenen Lagerbolzens (39) eine über die Verschlüsse (43 bis 45) spannbare Feder, ein Federpaket (40) od. dgl. befindet.

11. Fördereinrichtung nach wenigstens einem der vorhergehenden Ansprüche, dadurch gekennzeichnet, daß das vom Außenrad (5) angetriebene Ritzel (6) drehbar auf einem mit der Gehäusewand (2) verbundenen Lagerzapfen (7) angeordnet ist.

12. Fördereinrichtung nach wenigstens einem der vorhergehenden Ansprüche, dadurch gekennzeichnet, daß in der rohrförmigen Gehäusewand (4) eine Tasche (50) ausgearbeitet ist, die in die radiale Auslaßöffnung (17) des Gehäuses übergeht, wobei sich an letztere, vorzugsweise ein Auslaufrohr (51) anschließt.

13. Fördereinrichtung nach Anspruch 12, dadurch gekennzeichnet, daß sich die Tasche (50) im Bereich des sich in Drehrichtung (16) gesehen vorderen Endes (51) des Drucksegments (12) befindet.

## Claims

1. Feeding device, in particular for pasty substances, having a pump consisting of an internally toothed drivable outer wheel (5) which is rotatably mounted in a pump housing (1 – 4), as well as of an externally toothed pinion (6) which is rotatable in the said outer wheel (5) and is disposed excentrically with respect to the outer wheel, a wedge shaped curved pressure segment (12) being located in the space between the outer wheel (5) and the pinion (6) and, viewed in the direction of rotation (16), being disposed between the inlet (13) and the outlet (17) offset in the peripheral direction, characterised in that a charging container (18) is located in front of the pump inlet opening (13) in which container a feed apparatus (19), of which the feed direction is directed towards the inlet opening (13), and a stopper (20) preventing the rotation of the charged material are located, the feed apparatus (19) essentially consisting of a drivable worm (21) or the like, the range of movement of which is adapted to the contour of the container (18), in particular the end (23) of the container (18) associated with the pump housing (1), and of which the drive shaft (25) is centrally disposed in the container (18) which is constructed in a rotationally symmetrical manner, at least the container end (23) associated with the pump housing (1) being formed such that it is in the form of a wedge or truncated cone, and the worm (21) or the like having the shape of a wedge-shaped spiral produced from a strip-like component, the stopper (20) engaging in the spiral end (28) facing away from the pump housing (1) with a slight clearance, the stopper consisting of at least one, preferably however two curved or C-shaped stopper components (29, 30) offset by 180°, the free leg ends (31) of which engage from above in the worm (21) or the like.

2. Feeding device according to Claim 1, characterised in that the stopper or stoppers (20) are secured on a guide bush (32) surrounding the drive shaft (25) of the worm (21) or the like, the free C component ends (31) being directed towards the drive-shaft (25).

3. Feeding device according to at least one of the preceding Claims, characterised by a mounting (34) for the drive (26, 27) of the feeding apparatus (19) mounted on the container edge (33).

4. Feeding device according to Claim 3, characterised in that the mounting (34) consits of a bearing flange, which in particular has three arms, and the drive (26, 27) for the feeding apparatus (19) consits of an electro-motor (26) with a gear unit (27).

5. Feeding device according to at least one of the preceding Claims, characterised in that the inlet opening (13) of the pump is located on the upper, in particular flat housing wall (2) thereof and above this housing wall a carrier plate (36) for the charging container (18) is disposed which comprises an aperture (37) corresponding to the pump inlet aperture.

6. Feeding device according to Claim 5, characterised in that the carrier plate is in particular connected to a lateral projection (38) having a bearing sleeve or a bearing bolt (39), the bearing sleeve surrounding a bearing bolt rigid with the housing or the bearing bolt (39) engaging in a bearing sleeve (42) rigid with the housing and the geometrical bearing axis of the bearing bolt (39) extending parallel to the drive shaft (25, of the feeding apparatus (19) and perpendicular to the plane of the carrier plate (36).

7. Feeding device according to claim 5 or 6, characterised in that the carrier plate (36) can be connected to the pump housing (1) by at least one, preferably however three fastening devices (43, 44, 45) offset by 90° with respect to one another.

8. Feeding device according to Claim 6 or 7, characterised by at least one handle (49) projecting in particular somewhat radially for pivoting the container (18) with respect to the pump housing (1).

9. Feeding device according to Claim 7 or 8. characterised by a release mechanism (39, 40) for lifting slightly the container (18) with respect to the pump housing (1) when the fastening devices (43 - 45) are released.

10. Feeding device according to Claim 9, characterised in that a spring, set of springs (40, or the like, which can be tensioned by the fastening devices (43 – 45), is located below the bearing bolt (39) connected to the carrier plate (36) of the container (18).

11. Feeding device according to at least one of the preceding Claims, characterised in that the pinion (6) driven by the outer wheel (5) is rotatably disposed on a bearing lug (7) connected to the housing wall (2).

12. Feeding device according to at least one of the preceding Claims, characterised in that in the tubular housing wall (4) there is prepared a pocket (50) which merges into the radial outlet aperture (17) of the housing, an outlet tube (51) preferably being attached to the latter.

13. Feeding device according to Claim 12, characterised in that the pocket (50) is located in the vicinity of the front end (51) of the pressure segment (12) viewed in the direction of rotation (16).

**Revendications**

1. Dispositif de transfert, en particulier pour des matières épaisses, comprenant une pompe constituée par une roue extérieure (5) à denture intérieure qui est montée tournante dans un carter de pompe (1 à 4) et qui peut être entraînée, ainsi que par un pignon (6) à denture extérieure qui peut tourner dans celle-ci et qui est disposé de manière excentrée par rapport à la roue extérieure, cependant que, dans l'espace entre la roue extérieure (5) et le pignon (6), se trouve un segment presseur (12) courbé en forme de coin qui, vu dans la direction de rotation (16), est disposé entre l'entrée (13) et la sortie (17) décalée dans la direction de la périphérie, caractérisé par le fait qu'en amont de l'orifice d'entrée (13) de la pompe est monté un réservoir de remplissage (18) dans lequel se trouvent un dispositif de déplacement (19) dont la direction de déplacement est dirigée vers l'orifice d'entrée (13) et un arrêtoir (20) qui empêche le produit introduit d'être entraîné en rotation, cependant que le dispositif de déplacement (19) se compose pour l'essentiel d'une vis sans fin (21) pouvant être entraînée, ou similaire, dont la région de déplacement est adaptée au contour du réservoir (18), et en particulier de l'extrémité (23) du réservoir (18) qui est associée au carter (1) de la pompe, et dont l'arbre d'entraînement (25) est disposé au centre du réservoir (18) réalisé à symétrie de révolution, au moins l'extrémité (23) du réservoir qui est associée au carter (1) de la pompe étant réalisée en forme de cône ou de tronc de cône, et la vis sans fin (21) ou imilaire présentant la forme d'une spirale en forme de cône fabriquée à partir d'un élément en forme de bande, cependant que l'arrêtoir (20) pénètre avec uin faible jeu dans l'extrémité (28) de la spirale qui est opposée au carter (1) de la pompe, et qu'il se compose d'aumoins un élément d'arrêtoir, mais de préférence de deux éléments d'arrêtoir (29, 30) en forme d'arcs ou de C décalés de 180° dont les extrémités libres (31) des ailes pénètrent depuis le haut dans la vis sans fin (21) ou similaire.

2. Dispositif de tranfert selon la revendication 1, caractérisé par le fait que le ou les arrêtoirs (20) sont fixés à une douille de guidage (32) qui entoure l'arbre d'entraînement (25) de la vis sans fin (21) ou similaire, les extrémités libres (31) des éléments en C étant dirigées vers l'arbre d'entraînement (25).

3. Dispositif de tranfert selon l'une au moins des revendications précédentes, caractérisé par un organe de maintien (34) posé sur le bord (33) du réservoir et destiné à l'entraînement (26, 27) du dispositif de déplacement (19).

4. Dispositif de transfert selon la revendication 3, caractérisé par le fait que l'organe de maintien (34) se compose d'une bride de palier, en particulier à trois bras, et que l'entraînement (26, 28) destiné au dispositif de déplacement (19) se compose d'un moteur électrique (26) muni d'une transmission (27).

5. Dispositif de transfert selon l'une au moins des revendications précédentes, caractérisé par le fait que l'orifice d'entrée (13) de la pompe se trouve sur la paroi supérieure (2), en particulier plane, du carter de la pompe, et qu'est disposée au-dessus de cette paroi du carter une plaque porteuse (36) qui est destinée au réservoir de remplissage (18) et qui comporte une ouverture (37) correspondant à l'orifice d'entrée de la pompe.

6. Dispositif de tranfert selon la revendication 5, caractérisé par le fait que la plaque porteuse est reliée à un manchon de palier ou à une tige de palier (39), en particulier par un prolongement latéral (38), cependant que le manchon de palier entoure une tige de palier soldiaire du carter ou, reprectivement, que la tige de palier (39) pénètre dans un manchon de palier (42) solidaire du carter, et que l'axe géométrique de la tige de palier (39) s'étend parallèlement à l'arbre d'entraînement (25) du dispositif de déplacement (19), ainsi que perpendiculairement au plan de la plaque porteuse (36).

7. Dispositif de transfert selon la revendication 5 ou 6, caractérisé par le fait que la plaque porteuse (36) peut être reliée au carter (1) de la pompe par au moins une fermeture, mais de préférence par trois fermetures (43, 44, 45) décalées de 90°C les unes par rapport aux autres.

8. Dispositif de transfert selon la revendication 6 ou 7, caractérisé par au moins une poignée (49), en particulier en saillie de manière sensiblement radiale, pour faire pivoter le réservoir (18) par rapport au carter (1) de la pompe.

9. Dispositif de tranfert selon la revendication 7 ou 8, caractérisé par un dispositif de poussée (39, 40) pour soulever légèrement le réservoir (18) par rapport au carter (1) de la pompe lorsque les fermetures (43 à 45) sont défaites.

10. Dispositif de transfert selon la revendication 9, caractérisé par le fait qu'un ressort, un empilement de ressorts (40) ou similaire qui peut être serré par les fermetures (43 à 45) se trouve au-dessous de la tige de palier (39) reliée à la plaque porteuse (36) du réservoir (18).

11. Dispositif de transfert selon l'une au moins des revendications précédentes, caractérisé par le fait que le pignon (6) qui est entraîné par la roue extérieure (5) est monté tournant sur un tourillon de palier (7) relié à la paroi (2) du carter.

12. Dispositif de transfert selon l'une au moins des revendications précédentes, caractérisé par le fait qu'une poche (50) est ménagée dans la paroi tubulaire (4) du carter, et qu'elle se prolonge par l'orifice de sortie redial (17) du carter, un tube d'évacuation (51) se raccordant de préférence à ce dernier.

13. Dispositif de transfert selon la revendication 12, caractérisé par le fait que la poche (50) se trouve dans la région de l'extrémité (51) du segment presseur (12) qui est en avant dans le sens de la rotation (16).

*Fig. 1*

Fig.2